# EUROPEAN PATENT APPLICATION

(11) **EP 0 709 283 A1**
(43) Date of publication of application: **01.05.1996**
(21) Application number: 95500144.1
(22) Date of filing: 25.10.1995
(51) Int. Cl.: B62J 9/00

(54) **Mechanism for the closure and securing of cases for motorcycles and similar vehicles**

(30) Priority: 31.10.1994 ES 9402766 U
(71) Applicant: Lucia Monforte, Pedro, E-08100 Mollet del Valles (ES)
(72) Inventor: Lucia Monforte, Pedro, E-08100 Mollet del Valles (ES)
(74) Representative: Ponti Sales, Adelaida

(57) **Abstract**

It includes a lock (6) intended to block or release at will an engagement member (25) of the lid (3) in closure position on the tub part (2) of the case, the latter being provided with a fold-down handle (16) and means to prevent detachment of the case (1) from the chassis (17) of the motorcycle. It comprises an opening lever (4) hinged onto the tub part (2) and carrying the lock (6), the latch (7) of the lock being arranged in the closure position between stops (8) which are integral with the tub part, thus blocking the movement of the lever (4); the opening lever (4) has hinged to it a link (9) adapted for cooperation with an engagement member (25) integral with the lid (3), when the latter is in closed position; when the latch (7) of the lock is in closed position it immobilizes a blocking pin (20) which is biased by a spring (21) towards a position of retention of the case (1) on a seating base integral with the chassis (17) of the motorcycle; and the blocking pin (20) is actuated by a releasing lever (18) which remains inaccessible while the handle (16) is in lowered position.

It ensures the closure of the case, both when it is secured and when it is not secured to the motorcycle, and it prevents removal of the case if the closure is in working position.

## Description

The present invention relates to a mechanism for the closure and securing of cases for motorcycles and similar vehicles; the use of said mechanism ensures the closure of the case, both when it is secured and when it is not secured to the motorcycle, and the same time it prevents removal of the case if the closure is in working position.

### BACKGROUND OF THE INVENTION

The attachment of cases to motorcycles is increasingly frequent, which makes it essential to ensure the inviolability of such cases, both in respect of undue opening of the lid and in respect of the device for securing the case to the motorcycle chassis.

### DESCRIPTION OF THE INVENTION

The closure and securing mechanism of the invention has been designed to provide an effective solution to the needs that have arisen.

The mechanism in question comprises a lock destined to block or release at will an engagement member of the lid in closed position on the tub part of the case, the latter being provided with a fold-down handle and means to prevent the case being detached from the chassis of the motorcycle. On the basis of this embodiment, the mechanism is characterized in that it comprises an opening lever hinged onto the tub part and carrying the lock. The latch of the lock is arranged in the closure position between stops which are integral with the tub part, thus blocking the movement of the lever. On the other hand, the opening lever has hinged onto it a link adapted for cooperation with an engagement member integral with the lid, when the latter is in closed position. When the latch of the lock is in closed position it also immobilizes a blocking pin which is biased by a spring towards a position of retention of the case on a seating base integral with the chassis of the motorcycle. The blocking pin is actuated by a releasing lever which remains inaccessible while the handle is in lowered position.

The engagement link hinged to the opening lever is constituted by a bar bent to a C-like shape having its ends guided, with the possibility of a limited movement, inside side grooves of the lever. Hinged to said ends are two rods, which are also hinged to brackets integral with the tub part. The central portion of the C-shaped bar cooperates with the engagement member integral with the lid.

The releasing lever is surrounded by the handle when both are folded down on the front side of the case, so that the handle has to be raised to gain access to the lever.

### BRIEF DESCRIPTION OF THE DRAWINGS

For a better understanding of all that is set out in the present specification some drawings are attached in which, solely by way of example, a practical example of embodiment of the closure and securing mechanism for cases for motorcycles and the like is shown.
In said drawings,
Figure 1 is a longitudinal section view of the mechanism in closed position;
Figure 2 is a view similar to the previous one, with the mechanism in opened position of the lid and the case anchored on the chassis of the motorcycle;
Figure 3 is a view similar to the previous ones, with the lid closed and the handle raised; and
Figure 4 is a view similar to the previous ones, showing the mechanism in a position of closure of the lid and release of the case from the motorcycle chassis.

### DESCRIPTION OF A PREFERRED EMBODIMENT

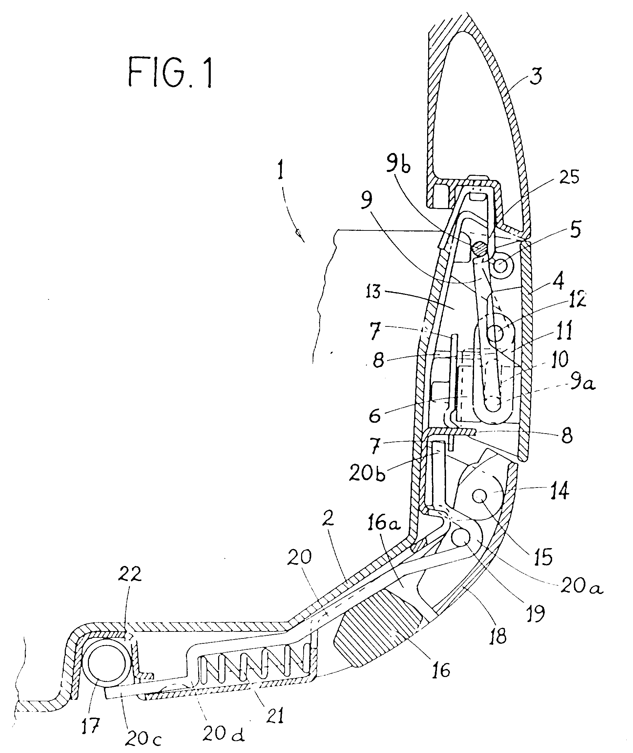

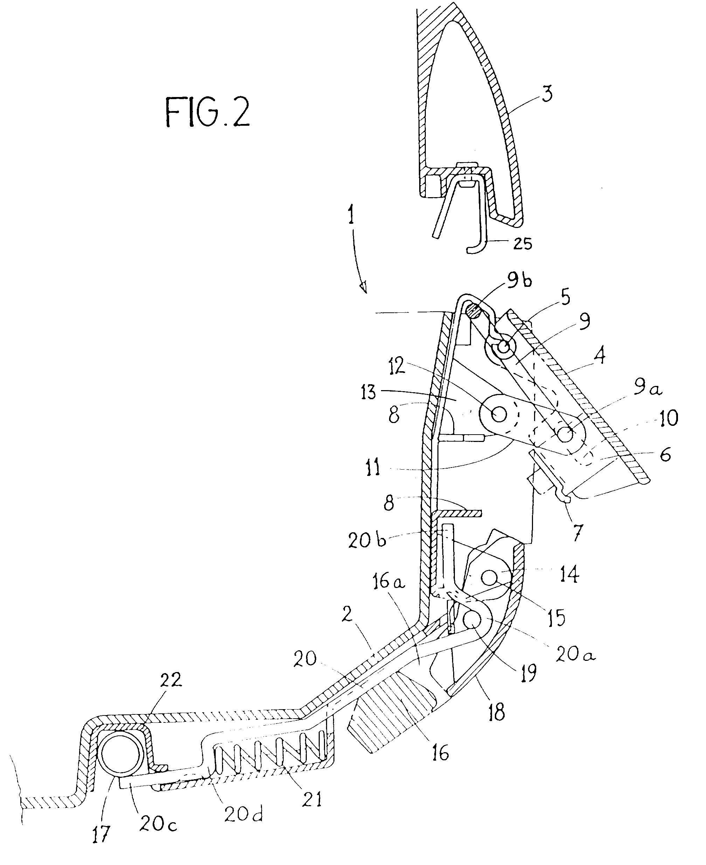

The drawings show a partial view of a case -1- constituted by a tub part -2- and a hinged lid -3-. On the top part of the tub -2- is hinged an opening lever -4- around a pin -5-, said lever having a lock -6- with a rotating latch -7- which can be immobilized in closure position between two stops -8- integral with the tub. On the lever -4- is hinged a link -9- made up of a bar bent to a C-like shape with elbowed ends -9a- guided within side grooves -10- formed in the lever -4-. The central portion -9b- of the link -9- is intended for connection with an engagement member -25- integral with the lid -3-. Furthermore, on the ends -9a- of the link -9- are hinged rods -11- which at the same time hinge around pins -12- mounted on tabs -13- integral with the tub -2-. Thus, when the opening lever -4- is pulled outwards, following opening of the lock -6-, the end -9b- of the link -9- is released from the engagement member -25- to open the lid -3- (Figure 2). When the lever -4- is returned to its lowered position against the tub -2-, the end -9b- is engaged into member -25-, closing the lid -3-, which remains immobilized thanks to the latches -7- retained by the stops -8- (Figure 1).

The tub is further provided with tabs or projections -14- provided with a pin -15- on which hinges a handle -16- for hand transportation of the case, following release of a device which retains it on a component -17- integral with the chassis of the motorcycle, as described below.

The device for retaining the case on the motorcycle chassis comprises a releasing lever -18- hinged to the pin -15- and located between side arms -16a- of the handle. These arms have a projecting boss -19- attached to a blocking part -20- which is axially displaceable and provided with a bent section -20a- which encircles the boss -19-, one end -20b- which can be blocked by the latch -7- in the closure position, one end -20c- having the function of a blocking pin, and a stepped section -20d- on which a spring -21- rests, said spring tending to keep said blocking part -20- in a working position in which its end -20c- rests against the component -17- of the chassis, housed in a reinforced hollow -22- of the lower side of the case, when the case is resting on said chassis (Figures 1, 2 and 3).

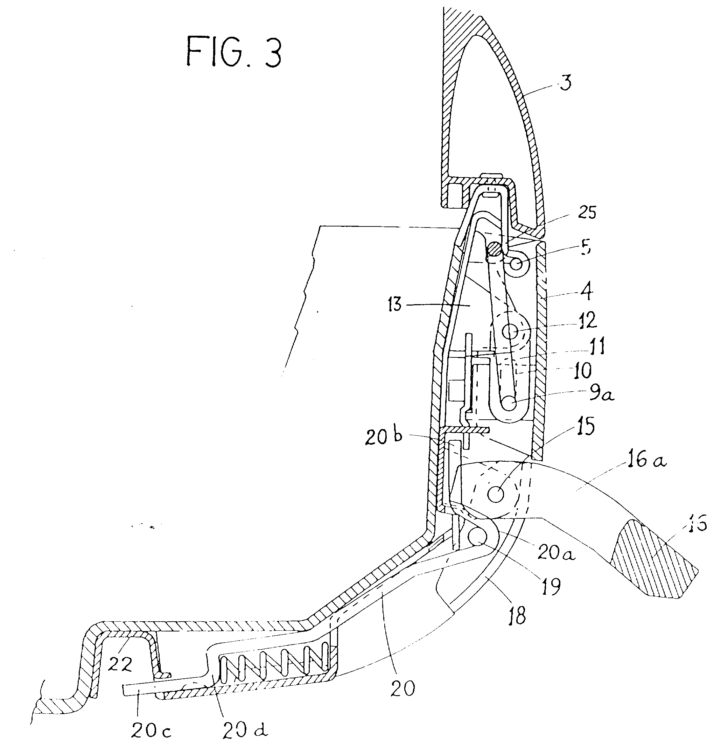

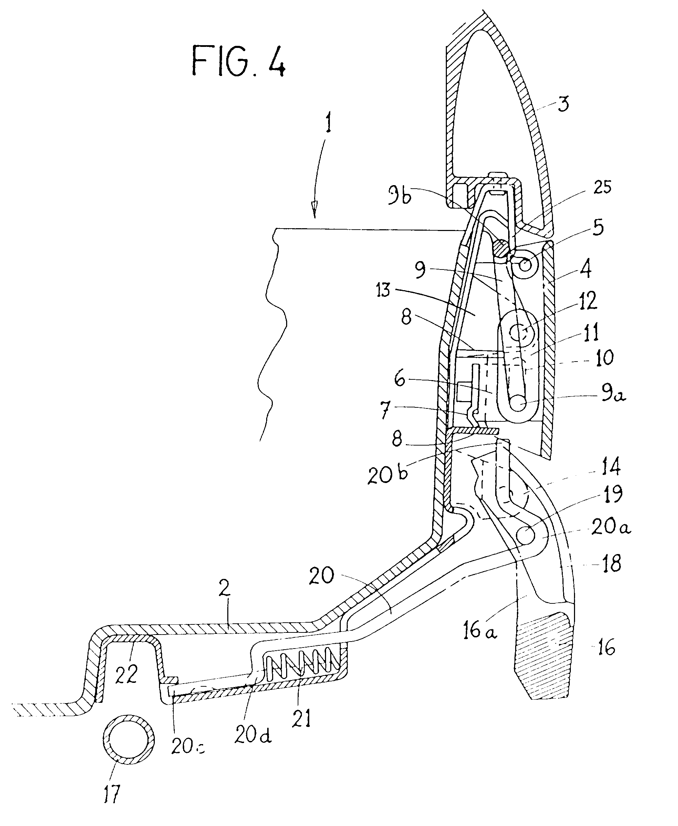

In order to detach the case from the chassis -17-, the lock -6- must first be opened in order to release the end -20b- of the blocking part -20-. The handle -16- must then be lifted in order to provide access to the lever -18- (Figure 3). Finally, the lever -18- must be lifted so that the boss -19- pulls on the blocking part -20- which moves compressing the spring -21- until the pin -20c- is detached from the component -17- of the chassis, the case being thereafter detachable from the chassis (Figure 4). Upon release of the lever -18- the retention device returns to its position thanks to the action of the spring -21-.

Independent of the object of the invention shall be the materials used in manufacturing the components of the case closure and retention mechanism, their shapes and dimensions and all accessory details which might arise, as long as they do not affect its essential nature.

## Claims

1. Mechanism for the closure and securing of cases for motorcycles and similar vehicles, which includes a lock (6) intended to block or release at will an engagement member (25) of the lid (3) in closure position on the tub part (2) of the case, the latter being provided with a fold-down handle (16) and means to prevent detachment of the case (1) from the chassis (17) of the motorcycle, characterized in that it comprises an opening lever (4) hinged onto the tub part (2) and carrying the lock (6), the latch (7) of the lock being arranged in the closure position between stops (8) which are integral with the tub part, thus blocking the movement of the lever (4); in that the opening lever (4) has hinged to it a link (9) adapted for cooperation with an engagement member (25) integral with the lid (3), when the latter is in closed position; in that when the latch (7) of the lock is in closed position it immobilizes a blocking pin (20) which is biased by a spring (21) towards a position of retention of the case (1) on a seating base integral with the chassis (17) of the motorcycle; and in that the blocking pin (20) is actuated by a releasing lever (18) which remains inaccessible while the handle (16) is in lowered position.

2. Mechanism as claimed in Claim 1, characterized in that the engagement link hinged to the opening lever (4) is constituted by a bar (9) bent to a C-like shape having its ends (9a) guided, with the possibility of a limited movement, inside side grooves (10) of the lever; and in that hinged to said ends are two rods (11), which are also hinged to tabs (13) integral with the tub part (2), while the central portion (9b) of the C-shaped bar (9) cooperates with the engagement member (25) integral with the lid (3).

3. Mechanism as claimed in Claim 1, characterized in that the releasing lever (18) is surrounded by the handle (16) when both are folded down on the front side of the case.
